(19) **Europäisches Patentamt / European Patent Office / Office européen des brevets**

(11) **EP 1 084 360 B1**

(12) **EUROPEAN PATENT SPECIFICATION**

(45) Date of publication and mention
of the grant of the patent:
**16.07.2008 Bulletin 2008/29**

(51) Int Cl.:
*F16K 31/02* (2006.01)  *F16K 31/06* (2006.01)
*F02M 59/46* (2006.01)  *F02M 63/00* (2006.01)
*F01L 9/02* (2006.01)

(21) Application number: **99925710.8**

(22) Date of filing: **21.05.1999**

(86) International application number:
**PCT/US1999/011205**

(87) International publication number:
**WO 1999/061828 (02.12.1999 Gazette 1999/48)**

(54) **FAST VALVE AND ACTUATOR**

SCHNELLSCHALTENDES VENTIL UND AKTUATOR

SOUPAPE ET ACTIONNEUR A ACTION RAPIDE

(84) Designated Contracting States:
**DE FR GB IT SE**

(30) Priority: **22.05.1998 US 86617 P**

(43) Date of publication of application:
**21.03.2001 Bulletin 2001/12**

(73) Proprietor: **UNITED STATES ENVIRONMENTAL PROTECTION AGENCY Washington, DC 20460 (US)**

(72) Inventor: **GRAY, Charles, L., Jr. Pinckney, MI 48169 (US)**

(74) Representative: **Modiano, Micaela Nadia Modiano Josif Pisanty & Staub Ltd Thierschstrasse 11 80538 München (DE)**

(56) References cited:
| | |
|---|---|
| DE-A1- 4 030 890 | GB-A- 1 156 018 |
| US-A- 885 459 | US-A- 974 413 |
| US-A- 2 584 127 | US-A- 2 916 019 |
| US-A- 3 324 890 | US-A- 3 472 278 |
| US-A- 4 359 032 | US-A- 4 365 563 |
| US-A- 4 465 049 | US-A- 4 627 596 |
| US-A- 4 665 936 | US-A- 4 759 527 |
| US-A- 4 770 389 | US-A- 5 074 259 |
| US-A- 5 598 871 | US-A- 5 638 781 |

• **PATENT ABSTRACTS OF JAPAN vol. 014, no. 339 (M-1001), 23 July 1990 (1990-07-23) & JP 02 118281 A (CKD CORP), 2 May 1990 (1990-05-02)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The principal utility of the invention is with valve and actuator applications where extremely fast response is very desirable. For example, a piston engine that needs to introduce fuel through direct injection within 30 degrees of crank rotation and that is running at 4000 rpm, has 1.25 milliseconds to open the fuel injection valve, inject the fuel and close the valve. The most apparent field of application is in internal-combustion engines for motor vehicles.

DESCRIPTION OF THE PRIOR ART

The growing utilization of automobiles has greatly added to the atmospheric concentration of various pollutants including oxides of nitrogen and greenhouse gases such as carbon dioxide. In a quest for approaches which could significantly improve the efficiency of fuel utilization for automotive powertrains, while still achieving low levels of NOx emissions, the need for fast valves and actuators became apparent and this invention was conceived.

Conventional "fast" valves begin a valving change from either an open or closed position. In the closed position the "movable component" of the valve has "sealed" (usually against a seat or, in a spool valve, by positioning the spool so that flow from the high pressure port is blocked). A command to open results in a force being applied to the movable component, and movement (i.e., acceleration) of the mass of the movable component begins according to the following equation:

$$\underline{\frac{F}{M}} = a$$

Where: "F" is the force applied to the movable component
"M" is the mass of the movable component
"a" is the acceleration of the movable component that results

The time required to move the movable component from the closed position to the fully open position is the time needed for valve opening, and this time is dependent on the acceleration and the distance the movable component must cover from the closed position to the fully open position. Conventional "fast" valves maximize acceleration by applying a very large force, minimize the mass of the movable components and minimize the travel distance by valve design to the extent possible. Extremely fast valve action (e.g., less than 1 millisecond) is therefore very difficult to achieve with conventional designs. Conventional valve designs begin the opening stage with an initial speed of zero. The acceleration rate results in a maximum speed that occurs at the end of the opening process. The average speed is therefore determined by the initial speed (i.e., zero) and the final speed, and for a near constant acceleration rate the average speed is about one half the final speed. Since the time for opening a conventional valve is the distance needed for travel to fully open the flow ports divided by the average speed, starting the valve opening from zero speed severely constrains the ability to obtain very fast valve openings.

United States patents 3,324,890; 2,916,019; 4,627,596; 974,413; and 3,472,278; as well as German patent DE 40 30 890 and Great Britain patent 1 156 018, all relate to solenoid actuated valve mechanisms such as internal combustion engine valves and slide valves for opening and closing passages for flowing mediums.

SUMMARY OF THE INVENTION

Accordingly, it is an object of the present invention to provide a valve mechanism which starts the valve port opening at a high initial speed and finishes the port opening near or above this high initial speed then goes through a deceleration zone, thus significantly reducing the time required for opening (and closing) the valve.

Another object of the present invention is to achieve the above-stated objective by a unique valve design which provides acceleration and deceleration zones to provide extremely fast valve opening and closing.

A third object of the present invention is provision of a unique, two-way spool valve incorporating the desired acceleration/deceleration features described above.

A fourth object of the present invention is provision of a unique, three-way spool valve incorporating the desired acceleration/deceleration features described above.

A fifth object of the present invention is provision of a unique control valve for a two-way actuator incorporating the desired acceleration/deceleration features.

A sixth object of the present invention is provision of a unique, two-way cartridge valve incorporating the desired acceleration/deceleration features.

A seventh object of the present invention is provision of a unique fuel injection (or fluid control) system utilizing two valves, having the desired acceleration/deceleration characteristics, for each injector and an appropriately sized high pressure fuel supply line, or line with a flow restrictor such as an orifice.

An eighth object of the present invention is provision of a unique gas flow control valve which a control valve having the desired acceleration/deceleration characteristics, a fast, hydraulic actuator and, integrated with the hydraulic actuator, a poppet valve also having the acceleration/deceleration characteristics of the present invention.

A ninth object of the present invention is provision of a new means for utilizing multiple solenoids in series to maximize and maintain the accelerating force on the movable component (valve member).

A tenth object of the present invention is provision of a unique solenoid actuated valve providing the acceleration/deceleration characteristics of the present invention.

The unique design and operation of this new valve are based on utilization of acceleration and deceleration zones to achieve very fast valve response. The valve provides a zone (i.e., distance) wherein the movable component can be accelerated to a high speed before the movable component starts the valve port opening. Therefore, the valve port opening occurs in the shortest time possible. A second zone (i.e., distance) is provided for deceleration of the movable component and this second "deceleration" zone also serves as the acceleration zone for the reverse action of the valve (i.e., closing).

More specifically, in one embodiment the present invention provides a fast-acting valve including a valve body and a valve spool slidably mounted in a bore within the valve body for reciprocating movement in a linear path between first and second limit (rest) positions, i.e. between fully closed and fully open positions. The valve body and the valve spool both have at least one flow passage which align in the valve open position. The flow passage through the valve body is spaced from the one spool fluid flow passage with the valve spool in the fully closed position by a distance including an acceleration zone and a deceleration zone. The acceleration zone may be defined as the distance through which the valve spool accelerates before the one spool fluid flow passage reaches a position initiating fluid communication between it and the one valve body flow passage, i.e. a position where the leading edge of valve spool flow passage enters the one valve body flow passage, whereby the flow passage is very quickly opened. The deceleration zone is the distance through which the valve spool decelerates before coming to rest in the fully open position. The fact acting valve of the present invention further includes first and second acceleration/deceleration means for alternately accelerating and decelerating the valve spool in travel between the fully open and fully closed rest positions. An additional drive means is provided in several embodiments for imparting the reciprocating movement to the valve spool. In one preferred embodiment springs or elastic members are mounted within opposing ends of the valve body bore and are compressed by the valve spool at the first and second limit positions, respectively. In this preferred embodiment, the acceleration and deceleration zones are equal in length to the distance a spring extends between a compressed state with the valve spool bearing against it in one of the fully closed and fully open positions and a relatively relaxed state with the valve spool in the other of the fully closed and fully open positions. This embodiment requires a separate motive means or actuator for driving the valve spool with the reciprocating movement and for holding the valve spool against the spring (or other elastic member) in its compressed state. An electromagnetic actuator would include at least one solenoid mounted at each end, surrounding the bore of the valve body.

In a further preferred embodiment at least two solenoids are mounted at opposing ends of the valve body, surrounding ends of the bore. In this embodiment the solenoids at one end would be energized in succession to accelerate the valve spool while the solenoids at the opposite end would be energized in succession to decelerate the valve spool.

The path through which the valve spool travels may include a gap between acceleration and deceleration zones. Toward this end the diameter of the valve body flow passage may be significantly larger than that of the flow passage through the valve spool.

In one preferred embodiment the valve body is further provided with a balancing chamber open to the valve spool at a position where the valve spool is diametrically opposed to the valve body inlet so that the force of the inlet pressure, tending to push the valve spool against one side of the bore is offset by pressure within the balancing chamber to negate the force at the valve body inlet. A conduit provides for fluid communication between the inlet to the valve body and the balancing chamber.

In other preferred embodiments the valve spool and the valve body are each provided with plural fluid passages which are selectively opened and closed as the valve spool slides relative to the valve body.

In another preferred embodiment the fast-acting valve of the present invention is in the form of a poppet valve for mounting in the head of a combustion chamber to control inlet of a fuel/air mixture or outlet of an exhaust gas.

In yet another preferred embodiment the fast-acting valve of the present invention is a cartridge valve which may be utilized in series with a fuel injection nozzle to form a fuel injection system.

The aim and objects of this invention are achieved by the methods and systems according to independent claim 1 and any other independent claims of this invention. Further details may be found in the remaining dependent claims.

BRIEF DESCRIPTION OF THE DRAWINGS

In the drawings:

Fig. 1A is a cross-sectional view of a valve according to a first embodiment of the present invention in its "OFF" (closed) position; and Fig. 1B is a cross-sectional view of the valve of Fig. 1A in its "ON" (open) position;
Fig. 2 is a cross-sectional view of a valve according to a second embodiment of the present invention in its closed position;

Fig. 3 is a cross-sectional view of a valve according to a third embodiment of the present invention in its open position;

Fig. 4A is a cross-sectional view of a valve according to a fourth embodiment of the present invention in its "OFF" (closed) position; and Fig. 4B is a cross-sectional view of the valve of Fig. 4A in its "ON" (open) position;

Fig. 5A is a cross-sectional view of a valve according to a fifth embodiment of the present invention in its "OFF" (closed) position; and Fig. 5B is a cross-sectional view of the valve of Fig. 5A in its "ON" (open) position;

Fig. 6A is a cross-sectional view of a valve according to a sixth embodiment of the present invention in its "OFF" (closed) position; and Fig. 6B is a cross-sectional view of the valve of Fig. 6A in its "ON" (open) position;

Fig. 7A is a cross-sectional view of a valve according to the seventh embodiment of the present invention in its "OFF" (closed) position; and Fig. 7B is a cross-sectional view of the valve of Fig. 7A in its "ON" (open) position;

Fig. 8 is a cross-sectional view of a valve according to the eighth embodiment shown in Figs. 7A and 7B;

Fig. 9A is a cross-sectional view of a valve according to a ninth embodiment of the present invention; and Fig. 9B is a schematic diagram of a fuel injection system including two valves in accordance with the ninth embodiment illustrated in Fig. 9A.

## DESCRIPTION OF THE PREFERRED EMBODIMENTS

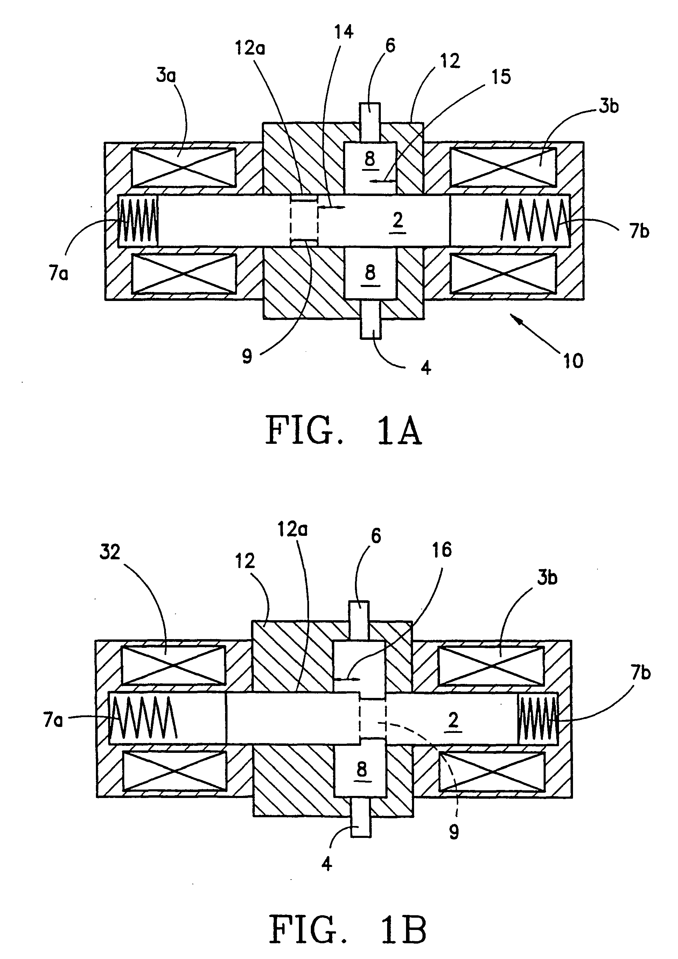

Figs. 1A and 1B illustrate a first embodiment of the present invention. As shown in Figs. 1A and 1B, the major components of the acceleration/deceleration spool valve 10 are the valve block 12 having an axial bore 12a, the slidable valve spool 2, solenoids 3a and 3b, fluid supply port 4, fluid discharge port 6, spool flow passage 9 and energy absorbing springs 7a and 7b.

Fig. 1A shows the spool 2 in its no-flow ("OFF") position. Pressurized fluid is present in fluid supply port 4 but is unable to flow to fluid discharge port 6 because flow passage 8 is blocked by the spool 2. Solenoid 3a is holding spool 2 in this position to offset the force of compressed spring 7a. When a command to open the valve is given, solenoid 3a terminates its holding force; solenoid 3b is activated to generate a force on the spool 2 and, in combination with the force being applied by spring 7a, initiates acceleration of the spool 2 from its leftmost position to the right. The spool 2 is accelerated through the first zone 14 which serves as an acceleration zone in movement toward opening. The spool flow passage 9 reaches the leading edge of flow passage 8 traveling at a high speed and the valve opening event occurs very quickly. As spool 2 continues traveling to the right, it engages the energy absorbing spring 7b and begins its deceleration as the leading edge of flow passage 9 enters deceleration zone 15. Movement of spool 2 terminates as the leading edge of spool flow passage 9 reaches the trailing edge of flow passage 8, at the position shown in Fig. 1B. To terminate fluid flow, the reverse process is employed. Solenoid 3b is disengaged, solenoid 3a is engaged and the spool 2 begins acceleration from the rightmost position shown in Fig. 1B to the leftmost position shown in Fig. 1A. The acceleration zone to terminate fluid flow is zone 16 in Fig. 1B.

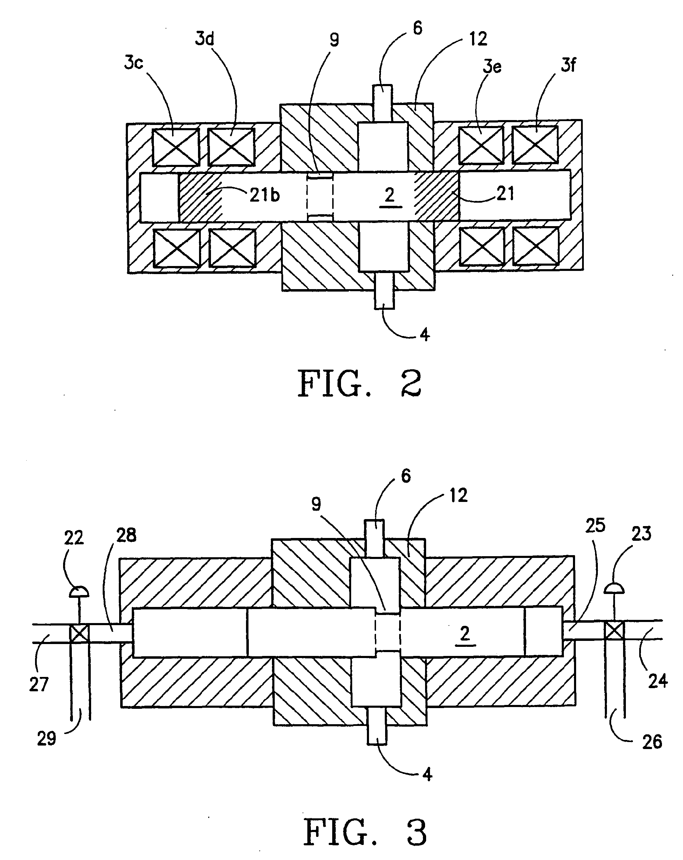

In a second embodiment, as depicted in Fig. 2, multiple solenoids 3c, 3d, 3e, 3f are used in series, with 3c and 3d at one end 3e and 3f at the other, to maximize the accelerating force on the spool through its entire acceleration zone. In this second embodiment, to accelerate spool 2 to the right, solenoid 3e is energized and acts on that part 2a of spool 2 which responds to the magnetic force. Solenoid 3d may also be energized to maximize the initial force on the spool as it acts on part 2b of spool 2. As the rightmost end of spool 2 passes solenoid 3e and its accelerating force is diminished, current to solenoid 3e is terminated (and current to solenoid 3d is also terminated), and solenoid 3f is energized to continue force on spool 2 through the entire acceleration zone. As the valve spool clears the acceleration zone, the opposing solenoids can be energized to create a reverse force on the valve spool, thereby decelerating the valve spool as it approaches the rest position. Thus, in this embodiment, if the current to the solenoids is reversible, the solenoids can be used both to accelerate and decelerate, thus dispensing with need for separate acceleration/ deceleration means, e.g. springs. To reverse the movement of spool 2 from its rightmost position to its leftmost position, the reverse process is employed. Current to solenoid 3f is terminated and solenoids 3e and 3d are energized. As the leftmost end of spool 2 passes solenoid 3d, current to solenoids 3d and 3e is terminated, and solenoid 3c is energized until spool 2 reaches its leftmost position.

Another modification would be to use means other than solenoids to provide the primary forces to accelerate the spool (or movable component in other embodiments). For example, Fig. 3 shows a third embodiment which utilizes hydraulic pressure to provide force for acceleration of spool 2. Spool 2 is shown in its rightmost position. To accelerate spool 2 to the left, valve 23 opens high pressure line 24 to spool port 25 while disconnecting low pressure line 26 from spool port 25. Valve 22 at the same time closes high pressure line 27 from spool port 28 while connecting low pressure line 27 to spool port 28. The high pressure hydraulic fluid acts on the right end of the spool 2, accelerating it to the left while fluid in the volume left of spool 2 flows from spool port 28 through valve 22 to low pressure line 29. To accelerate spool 2 from its leftmost position to the right, the reverse process is employed.

In yet another modification the springs would be deleted to minimize the "hold" force required of the solenoids (especially for applications where the valve will be in either the on or off position for an extended time) and other means would be used to decelerate the spool, such as, "hydraulic stops".

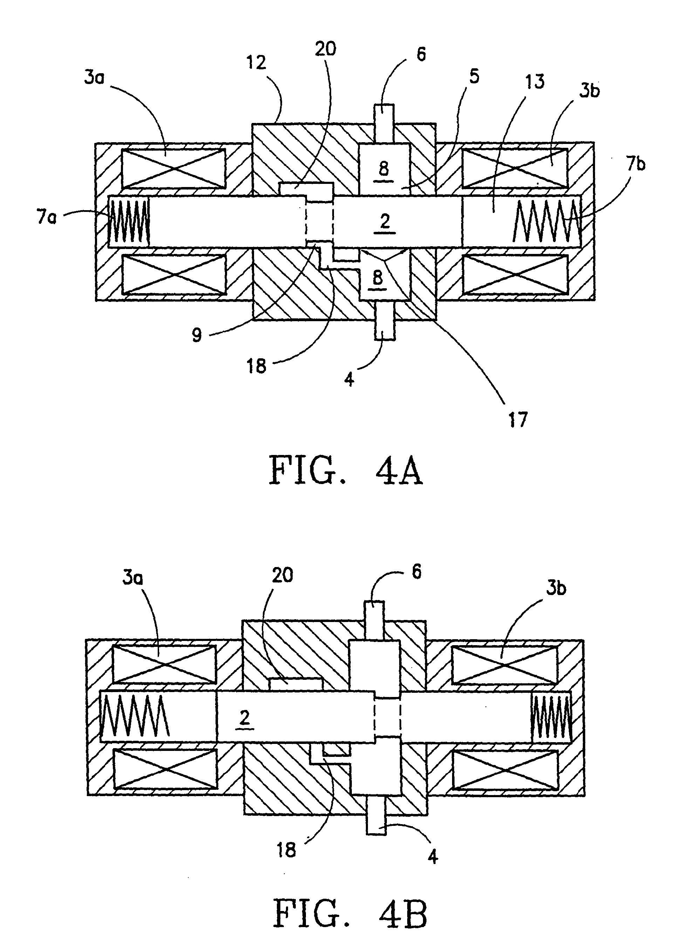

A fourth embodiment of the invention employs hydraulic force balancing on the spool to minimize the friction opposing movement of the spool. Figs. 4A and 4B show one means of providing hydraulic balance for the valve described in Fig. 1. In the off position, (Fig. 4A) fluid from the high pressure fluid supply port 4 acts on a bottom portion of the cylindrical surface of the spool 2 which increases the force of a top portion of the spool on the valve block 12 which increases friction when movement of the spool occurs, since the fluid discharge port 5 is likely to be at much lower pressure. By providing fluid at the same pressure as the fluid in the fluid supply port 4 to an area of the top portion of the spool that is equal to the area exposed to the bottom face of the spool through the fluid supply port 4, hydraulic balancing results. Accordingly, a fluid passage 18 connects the fluid supply port 4 to spool flow passage 9 in the valve off position. Fluid at the high pressure within port 4 is thereby provided to balancing port 20 to provide hydraulic balance. As the spool accelerates, the spool flow passage 9 moves beyond balancing port 20 and pressure begins to dissipate in balancing port 20 because it no longer is in direct communication with fluid supply port 4 and some leakage inherently will occur. As the spool flow passage 9 enters flow passage 8, high pressure fluid from fluid supply port 4 comes into direct communication with fluid discharge port 6 and hydraulic balance resumes. The surface area of spool 2 exposed to balancing port 20 is approximately equal to the surface area of spool 2 exposed to flow passage 8 on the side of inlet port 4 when the valve is in the off position shown in Fig. 4A.

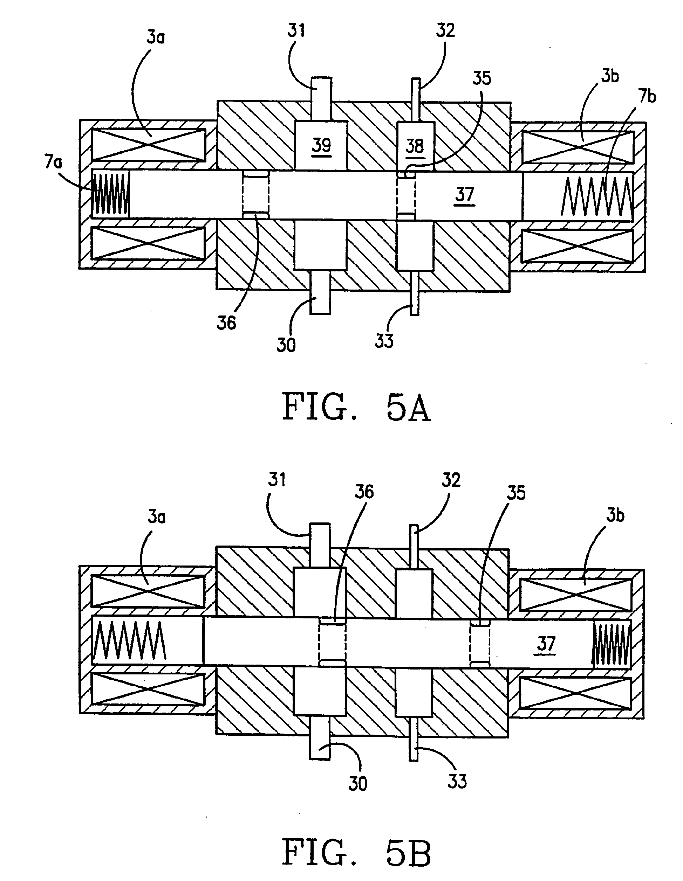

A fifth embodiment of the invention is shown in Figs. 5A and 5B. The operation of this valve will be described as it could be applied to the control of fuel (i.e., fluid) injection directly into the cylinder of an internal combustion piston engine.

Fluid supply port 30 is supplied with high pressure fuel. Fuel discharge port 31 is connected to a pressure-actuated fuel injector (not shown). Fuel vent port 32 is connected to fuel discharge port 31, or is connected to the line (not shown) connecting the fuel discharge port 31 to the fuel injector, or is connected directly to the fuel injector. Fuel return port 33 returns vented fuel to the fuel tank (not shown).

Fig. 5A shows the valve in the "off" position. When a command is given to inject fuel, solenoid 3a is disengaged, and solenoid 3b is engaged. Acceleration occurs as previously described in connection with Fig. 1A. Spool flow passage 35 passes beyond valve block flow passage 38 as spool flow passage 36 begins to enter valve block flow passage 39 and fuel is quickly supplied to the injector through fuel discharge port 31. Deceleration occurs as described in connection with Fig. 1A. Fig. 5B shows the spool 37 at rest in the valve "on" position. When a command is given to terminate the injection of fuel, solenoid 3b is disengaged, and solenoid 3a is engaged. As spool flow passage 36 passes beyond fuel valve block flow passage 39, spool flow passage 35 enters valve block flow passage 38, and the injector pressure is quickly vented, providing a clean, quick termination of the injection event.

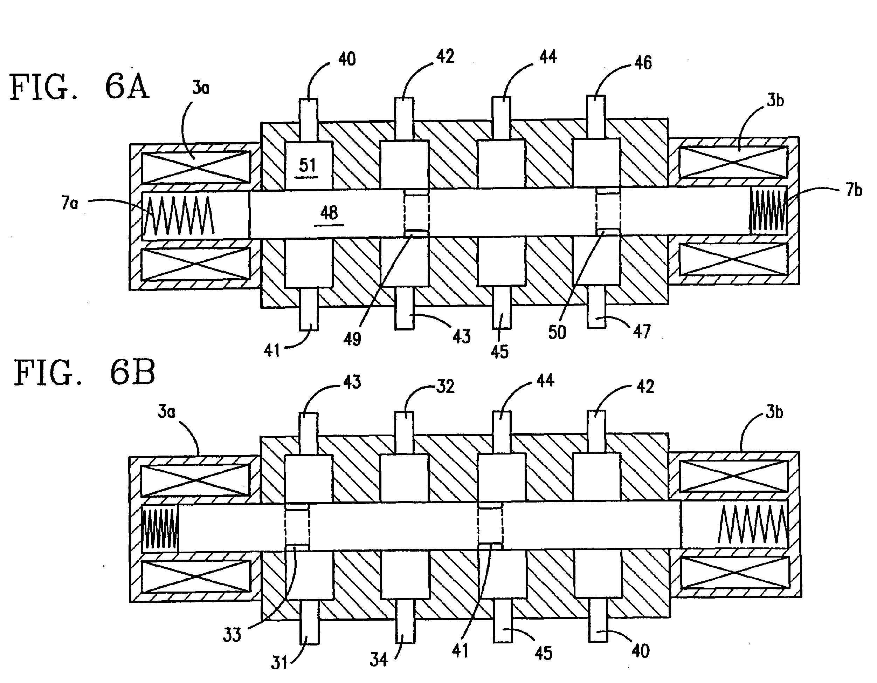

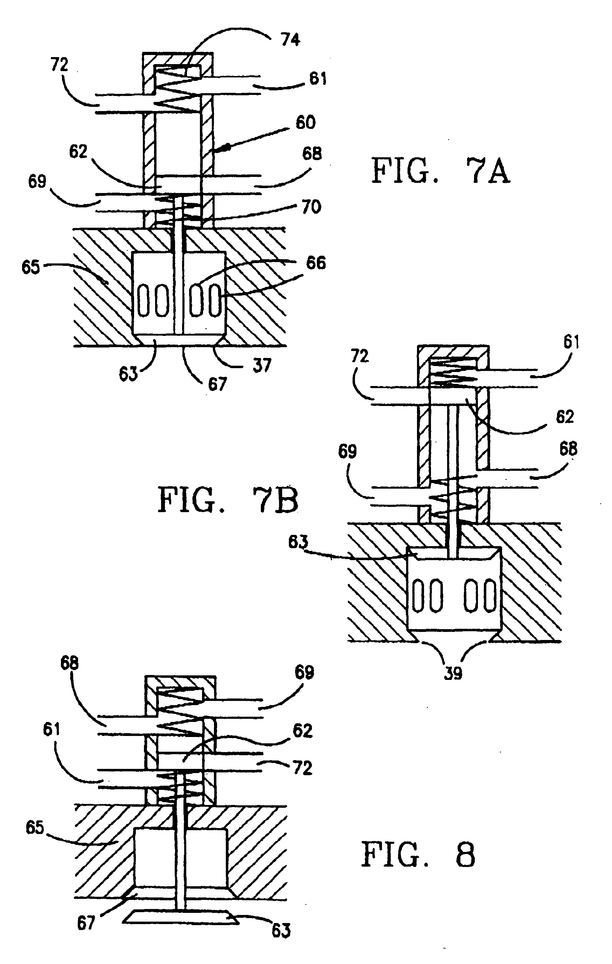

A sixth embodiment of the invention is shown in Figs. 6A and 6B. Figs. 7A and 7B show, as a seventh embodiment, an acceleration/deceleration gas flow valve that includes a fast actuator 60 which would be controlled by the valve of Figs. 6A and 6B.

Fig. 6A shows the control valve spool 48 in the position which will result in the gas flow valve of Fig. 7A being in the closed position. Considering Figs. 6A and 7A together, high-pressure fluid is supplied to ports 41 and 42. With the spool flow passage 49 providing fluid communication between port 42 and port 43, and port 43 connected to port 61 of the fast actuator 60, high-pressure fluid has acted on hydraulic piston 62 to move the poppet valve 63 against its seat 64, formed in cylinder head 65 closing a combustion chamber formed in an engine block (not shown). With poppet valve 63 seated in seat 64 the flow of gas between gas ports 66 and port 67 formed in cylinder head 65 is blocked. In order for the hydraulic piston 62 to travel to its lowermost position as shown in Fig. 7A, hydraulic fluid on the bottom side of hydraulic piston 62 flows out port 68 and, with port 68 connected to port 47, discharge fluid flows through spool flow passage 50 to port 46 which is connected to a low-pressure fluid storage tank (not shown).

When a command is given for the gas flow valve of Fig. 7A to open, solenoid 3b is disengaged, solenoid 3a is engaged, and the control valve spool 48 is first accelerated, and then decelerated to a stop in the position shown in Fig. 6B in the manner previously described in connection with Fig. 1B. As spool flow passage 49 enters valve block flow passage 51 it comes into communication with high-pressure fluid supply port 41, high-pressure fluid flows to port 40 and, with port 40 connected to port 69, high-pressure fluid acts on the bottom side of hydraulic piston 62 which, with the assistance of energy-absorbing spring 70, begins acceleration of poppet valve 63. Poppet valve 63 reaches a high speed as it approaches gas ports 66 and thus provides rapid opening. With ports 68 and 61 unable to permit the flow of fluid through the control valve, fluid on the top side of the hydraulic piston 62 must flow from port 72 to port 44 through spool flow passage 50 to port 45 which, like port 46, is connected to a low-pressure fluid storage tank (not shown). As the hydraulic piston 62 reaches energy absorbing spring 74, poppet valve 63 has passed to a position above gas ports 66, and deceleration can begin. As hydraulic piston 62 compresses energy absorbing spring 74 and begins to close port 72, it rapidly decelerates until it stops at a position (Fig. 7B) where it has closed port 72, and fluid can no longer flow. The poppet valve 63 acting in the manner of the acceleration/deceleration spool valve of Figs. 1A and 1B, provides very fast initiation of gas flow during opening and very fast termination of gas flow during closing. The pressure/port arrangement described above for the acceleration/deceleration control valve of Figs. 6A and 6B provides hydraulic balancing of the control valve.

The eighth embodiment shown in Fig. 8 is modification of the seventh embodiment wherein the poppet valve 63 shown in Figs. 7A and 7B is replaced by a conventional poppet valve actuated hydraulically and controlled by the acceleration/deceleration valve of Figs. 6A and 6B, in the same manner described for the valve of Figs. 7A and 7B, but without the acceleration/deceleration features of the gas flow control valve of Figs. 7A and 7B.

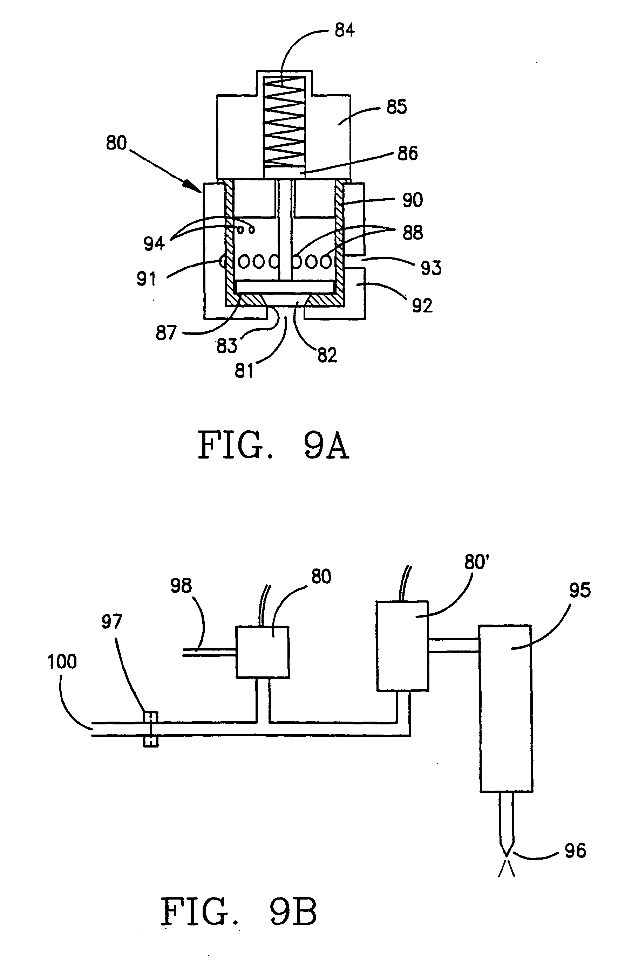

A ninth embodiment of the valve of the present invention is shown on Fig. 9A; and Fig. 9B shows how this valve could be used to create a unique fuel (or other fluid) injection system. The acceleration/deceleration control valve 80 shown in Fig. 9A is of the two-way cartridge type. High pressure fuel would be supplied to the supply port 81. In its maximum down position, poppet valve 82 would remain seated against its seat 83, preventing the flow of fuel. Spring 84 must be strong enough to hold poppet valve 82 in its maximum down position and must offset the force created by the high pressure fuel acting on the exposed face of poppet valve 82 at supply port 81. When a command to open is given, solenoid 85 is engaged and acts on poppet valve piston 86 to accelerate poppet valve 82 in the upward direction. As poppet valve 82 begins to move, high pressure fuel flows in through supply port 81 and accesses the larger area of the bottom face 87 of poppet valve 82. This additional force on valve 82 greatly increases its acceleration. As with the other embodiments of the acceleration/deceleration valve, a high speed is reached before the bottom face 87 of the poppet valve 82 crosses the exit ports 88, located in the cartridge valve body 90, thus providing a rapid opening of valve 80. The valve block 92 then collects the fuel flow through exit ports 88 in flow passage 91 and allows fuel flow to continue through block port 93. Poppet valve 82 begins deceleration after the bottom face 87 of the poppet valve 82 crosses the top of exit ports 88, due to compression of spring 84 and the closing of vent ports 94 (as more fully described with reference to Figs. 7A and 7B) by poppet valve 82. Poppet valve 82 is held in its uppermost position by solenoid 85 and/or the force of the high pressure fuel on the exposed face of poppet valve 82, and fuel flows to the injector. As will be described in greater detail with reference to Fig. 9B, when a command to stop fuel flow to the injector is given, the fuel pressure below the exposed face of poppet valve 82 is reduced, and solenoid 85 is disengaged. Spring 84 acting on poppet valve 82 then causes downward acceleration of poppet valve 82, which first travels past and the closes exit ports 88 (and thus stops fuel flow) and then approaches seat 83. As poppet valve 82 approaches its lowermost position, fuel flow past seat 83 is being restricted by poppet valve 82 thereby providing a hydraulic means for rapid deceleration to its lowermost position.

Fig. 9B shows a line 100 for supplying fuel at a high pressure from a supply source (not shown), two control valves 80 and 80', as described in Fig. 9A, together with a pressure actuated fuel injector 95 and an orifice 97, which in total are a unique fuel injection system. When a command to inject fuel is given, valve 80' is opened very quickly in the manner described with reference to Fig. 9A, and fuel flows to injector 95, providing a very rapid beginning of injection (a very highly desired characteristic in direct fuel injection systems). Because it is the objective of fuel injection systems to provide the maximum system pressure drop across the nozzle orifice(s) 96 so that the best possible fuel atomization can occur, orifice 97 must be sized so as to not represent a significant restriction to flow when fuel is to flow through orifice(s) 96. When a command to terminate injection is given, the solenoid of valve 80' is disengaged and the solenoid of valve 80 is engaged. As was described in reference to Fig. 9A, valve 80 opens very quickly and allows the high pressure fuel between orifice 97 and orifice(s) 96 to be vented through port 98 and returned to the fuel tank (not shown). Orifice 97 then restricts the flow of fuel because the flow passage of valve 80 has a much larger flow area than orifice 97. This reduced line pressure: (1) causes very rapid and precisely controllable termination of flow across the injector orifice(s) 96 (very highly desired characteristics for direct fuel injection systems), and (2) allows valve 80' to close quickly because of the reduced pressure on the face of poppet valve 82, as described in reference to Fig. 9A. As valve 80' closes, the solenoid of valve 80 is disengaged so that valve 80 begins closing before fuel line pressure can be restored by flow through orifice 97. Valve 80 will shut more slowly than valve 80' because it will experience a relatively much higher pressure on the face of its poppet valve 82 than valve 80' experiences. However, fuel injection has already terminated and a somewhat longer closing time for valve 80 has little undesirable consequence.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description.

**Claims**

1. A fast-acting valve comprising:

    a valve body having an axial bore (12a);
    a cylindrical valve spool (2, 48) slidably mounted in said bore for reciprocating movement in a linear path between a fully closed position at one side of said valve body and a fully open position at a side of said valve body opposite said one side;

at least one valve body fluid flow passage (8) extending through said valve body between inlet (4) and outlet (6) ports and intersecting said bore;

at least one valve spool fluid flow passage (9) extending through said valve spool (2, 48) between openings at opposing locations in a cylindrical surface of said valve spool (2, 48), said one valve body fluid flow passage (8) being spaced from said one spool fluid flow passage (9) with said valve spool (2, 48) in said fully closed position, to provide an acceleration zone (14) through which said valve spool (2, 48) accelerates before said one spool fluid flow passage (9) comes into fluid communication with said one valve body fluid flow passage (8) and to provide a deceleration zone (15) through which said valve spool (2, 48) is decelerated in advance of coming to rest in said fully open position, said acceleration zone having a length substantially longer than that required for sealing;

first acceleration/deceleration means for accelerating said valve spool (2, 48) from fully closed position in travel through said acceleration zone toward said fully open position and for decelerating said valve spool (2, 48) in returning to said fully closed position;

second acceleration/deceleration means for decelerating said valve spool (2, 48) in travel through said deceleration zone, approaching said fully open position and for accelerating said valve spool (2, 48) in leaving said fully open position; and

motive means for driving said valve spool (2, 48) with said reciprocating movement.

2. A fast acting valve according to claim 1 wherein said first and second acceleration/deceleration means are springs (7a, 7b).

3. A fast acting valve according to claim 2 wherein said acceleration and deceleration zones are equal in length to the distance a spring extends between a compressed state with said valve spool (2, 48) bearing against it in one of said fully closed and fully open positions and a relatively relaxed state with said valve spool (2, 48) in the other of said fully closed and fully open positions.

4. A fast acting valve according to claim 1 wherein said first and second acceleration/deceleration means are fluid chambers within opposing ends of said bore, each of said fluid chambers being in fluid communication with low pressure and high pressure lines (24) through valves.

5. A fast acting valve according to claim 1 wherein said valve body fluid flow passage has a significantly larger diameter than said spool fluid flow passage (9).

6. A fast-acting valve according to claim 1 wherein said motive means comprises first and second solenoids (3a - 3f) respectively located at said one side and said opposite side of said valve body.

7. A fast-acting valve according to claim 6 wherein said first and second solenoids (3a - 3f) also serve, respectively, as said first and second acceleration/deceleration means.

8. A fast-acting valve according to claim 1 wherein said one spool fluid flow passage (9) is fully closed by said valve body in said first limit position and is fully open to said one valve body fluid flow passage in said second limit position.

9. A fast-acting valve according to claim 1 wherein said one spool fluid flow passage (9) is in fluid communication with said one valve body fluid flow passage when said valve spool (2, 48) is at said second limit position.

10. A fast-acting valve according to claim 1 further comprising:

a balancing chamber formed within said valve body and open to contact with the cylindrical surface of said valve spool (2, 48) through an area diametrically opposed to an area of contact between the cylindrical surface of said valve spool (2, 48) and said valve body fluid flow passage on the side of said inlet port, the open area of said balancing chamber in communication with said valve spool (2, 48) being substantially equal to the area of communication between said valve spool (2, 48) and said valve body fluid flow passage with said valve spool (2, 48) located in said first limit position; and

a balancing conduit providing fluid communication between said balancing chamber and said valve body fluid flow passage on the side of the inlet port.

11. A fast-acting valve according to claim 1 further comprising:

a second valve body fluid flow passage extending through said valve body between inlet and outlet ports, said second valve body fluid flow passage being spaced from and parallel to said one valve body fluid flow passage; and

a second spool fluid flow passage extending through said valve spool (2, 48) between openings at opposing locations in the cylindrical surface of said valve spool (2, 48), said second spool fluid flow passage being spaced from and parallel to said one spool fluid flow passage (9).

**12.** A fast-acting valve according to claim 11 further comprising third and fourth valve body fluid flow passages, said one spool fluid flow passage (9) selectively allowing fluid flow through said first valve body fluid flow passage or said second valve body fluid flow passage and said second spool fluid flow passage selectively allowing flow through said third valve body fluid flow passage or said fourth valve body fluid flow passage.

**13.** A fast-acting valve according to claim 1 wherein the fast acting valve includes a fast-acting poppet valve mechanism with a poppet valve (63, 82) for selectively allowing or blocking fluid flow through an axial port in a cylinder head (65) closing a combustion chamber in an internal combustion engine, said poppet valve mechanism comprising:

an actuator wherein the valve body includes an axial bore (12a) having first, second, third and forth ports extending radially from and in fluid communication with the bore;
a piston slidably mounted in said bore for reciprocating movement between top and bottom limit position, said second port being closed by said piston in said bottom limit position, said third port being closed by said piston in said top limit position and said fourth port being above said top limit position; and
first and second spring means mounted within said bore, said first spring being compressed by said piston in said bottom limit position and relaxed with said piston being located in said top limit position and said second spring being compressed by said piston in said top limit position and relaxed with said piston in said bottom limit position; and
the poppet valve (63, 82) comprising;
a cylindrical valve chamber formed in the cylinder head (65) with the axial port at one end thereof opening into the combustion chamber and a radial port spaced from said axial port; and
a poppet valve (63, 82) member slidably mounted in said cylindrical valve chamber for movement between a lowermost limit position closing said axial port and an uppermost limit position clear of said radial port and where both said axial port and said radial port are open and in fluid communication with each other, said radial port being located intermediate said lowermost and uppermost limit positions, said lowermost limit position being spaced from said radial port so that said poppet valve (63, 82) member must travel through a predetermined distance upward from said lowermost limit position before reaching and subsequently uncovering said radial port, thereby opening the valve to allow fluid communication between and through said axial port and said radial port, and said uppermost limit position being spaced from said radial port so that said poppet valve (63, 82) member must travel through a predetermined distance downward from said uppermost limit position before reaching an subsequently uncovering said radial port thereby closing the valve by blocking fluid communication between said axial port and said radial port.

**14.** A fast-acting poppet valve mechanism according to claim 13 further including a control valve for operating the poppet valve (63, 82), said control valve comprising:

a control valve body having an axially extending bore and, intersecting said bore, first, second, third and fourth control valve passages extending in parallel through said control valve body between inlet and outlet ports;
a cylindrical valve spool (2, 48) slidably mounted in said bore for reciprocating movement in a linear path between a first limit position at one side of said control valve body and a second limit position at a side of said control valve body opposite said one side;
first and second spool fluid flow passages (9) extending through said valve spool (2, 48) between openings at opposing locations in a cylindrical surface of said valve spool (2, 48), said first and second fluid flow passages (9) being respectively located in said second and fourth control valve passages to allow flow therethrough, while said first and third control valve passages are closed by said valve spool (2, 48), with said valve spool (2, 48) in said second limit position and respectively located in said first and third control valve passages to allow flow therethrough, while said second and fourth control valve passages are closed by said valve spool (2, 48) in said first limit position;

wherein:

said first control valve passage is connected to said first port for introduction of a high pressure fluid thereto;
said second control valve passage is connected to said fourth port for introduction of a high pressure fluid thereto;
said third control valve passage is connected to said second port for drainage of fluid pressure therefrom; and
said fourth control valve passage is connected to said third port for drainage of fluid pressure therefrom.

15. A fast-acting valve according to claim 1 wherein the fast acting valve includes a fast-acting two-way cartridge valve comprising:

the valve body defining a cylindrical chamber with an axial port in a cylindrical end face of the cylindrical chamber, at least one radial port extending radially from the cylindrical chamber and a valve seat surrounding said axial port; a piston valve member slidably mounted in said cylindrical chamber for reciprocating movement between a closed limit position, where said piston valve member is seated in said valve seat blocking fluid communication between said axial and radial ports, and an open limit position where said piston valve member is clear of said radial port and axially opposite said axial port, relative to said radial port, allowing fluid communication between said axial and radial ports, said radial port being located axially intermediate said closed and open limit positions and axially spaced from said piston valve member in said closed and open limit positions to allow said piston valve member to accelerate in travel between said closed limit position and said radial port and in travel between said open limit position and said radial port; and bias means for biasing said piston valve toward said closed limit position.

16. A fast-acting valve according to claim 1 wherein the fast acting valve is part of a fuel injection system comprising:

a fuel injection nozzle; and first and second fast-acting two-way cartridge valves, said first cartridge valve being connected in series with said fuel injection nozzle for supplying fuel at high pressure to said fuel injection nozzle and said second cartridge valve being connected in parallel with said first cartridge valve for releasing high pressure from said fuel injection nozzle, through said first cartridge valve, each of said first and second cartridge valves comprising:

the valve body defining a cylindrical chamber with an axial port in a cylindrical end face of the cylindrical chamber and a radial port extending radially from the cylindrical chamber and a valve seat surrounding said axial port; a piston valve member slidably mounted in said cylindrical chamber for reciprocating movement between a closed limit position, where said piston valve member is seated in said valve seat blocking fluid communication between said axial and radial ports, and an open limit position where said piston valve member is clear of said radial port and axially opposite said axial port, relative to said radial port, allowing fluid communication between said axial and radial ports, said radial port being located axially intermediate said closed and open limit positions and axially spaced from said piston valve member in said closed and open limit positions to allow said piston valve member to accelerate in travel between said closed limit position and said radial port and in travel between said open limit position and said radial port; and bias means for biasing said piston valve toward said closed limit position.

17. A fuel injection system according to claim 16 further comprising:

conduits connecting said fuel injection nozzle with a high pressure fuel source and a low pressure fuel reservoir through said first and second cartridge values; and orifice means (96, 97) located in one of said conduits between said high pressure fuel source and said first and second cartridge valves.

18. A fast-acting valve according to claim 1 comprising:

at least two solenoids (3a - 3f) in series, located at said one side and at least two solenoids (3a - 3f) in series located at said opposite side, surrounding said bore, for alternately accelerating and decelerating said valve spool (2, 48) in travel between said fully closed and fully open positions.

19. A fast-acting valve according to claim 1 wherein the fast acting valve includes a fast-acting poppet valve mechanism for selectively allowing or blocking fluid flow through an axial port in a cylinder head (65) closing a combustion chamber in an internal combustion engine, said poppet valve mechanism comprising:

a cylindrical valve chamber formed in the cylinder head (65) with the axial port at one end thereof opening into the combustion chamber and at least one radial port spaced from said axial port; and a poppet valve member (63, 82) slidably mounted in said cylindrical valve chamber for movement between a lowermost limit position closing said axial port and an uppermost limit position clear of said radial port where both said axial port and said radial port are open and in fluid communication with each other, said radial port being located intermediate said lowermost and uppermost limit positions, said lowermost limit position being spaced from said radial port so that said poppet valve (63, 82) member must travel through a predetermined distance upward from said lowermost limit position before reaching and subsequently uncovering said radial port, thereby opening the valve to allow fluid communication between and through said axial port and said radial port and said uppermost limit position being spaced from said radial port so that said poppet valve (63, 82) member must travel through a predetermined distance downward from said uppermost limit position before reaching and subsequently uncovering said radial port thereby closing the valve by blocking fluid communication between said axial port and said radial port.

20. A fast acting valve according to claim 1 wherein the valve body fluid flow passage is a straight passage.

21. A fast acting valve according to claim 1 wherein the inlet and outlet ports are axially aligned.

**Patentansprüche**

1. Eine Schnellauslöseventil, das Folgendes umfasst:

    einen Ventilkörper mit einer axialen Bohrung (12a);
    einen zylindrischen Ventilschieber (2, 48), der verschiebbar in der Bohrung montiert ist zur Hin- und Herbewegung auf einem linearen Weg zwischen einer vollständig geschlossenen Position auf einer Seite des Ventilkörpers und einer vollständig offenen Position auf einer Seite des Ventilkörpers, die der einen Seite gegenüberliegt;
    mindestens einen Ventilkörper-Fluidströmungs-Durchgang (8), der sich durch den Ventilkörper zwischen der Einlass-(4) und der Auslass-(6)Öffnung erstreckt und die Bohrung schneidet;
    mindestens ein Ventilschieber-Fluidströmungs-Durchgang (9), der sich durch den Ventilschieber (2, 48) zwischen Öffnungen an gegenüberliegenden Positionen in einer zylindrischen Oberfläche des Ventilschiebers (2, 48) erstreckt, wobei der eine Ventilkörper-Fluidströmungs-Durchgang (8) von dem einen Schieber-Fluidströmungs-Durchgang (9) mit dem Ventilschieber (2, 48) in der vollständig geschlossenen Position beabstandet ist, um eine Beschleunigungszone (14) zu bilden, durch welche der Ventilschieber (2, 48) beschleunigt wird, bevor der eine Schieber-Fluidströmungs-Durchgang (9) in Flüssigkeitsaustausch mit dem einen Ventilkörper-Fluidströmungs-Durchgang (8) kommt, und um eine Verzögerungszone (15) zu bilden, durch welche der Ventilschieber (2, 48) verlangsamt wird, bevor er in der vollständig offenen Position zum Stillstand kommt, wobei die Beschleunigungszone eine Länge hat, die wesentlich größer ist als zum Abdichten erforderlich;
erste Beschleunigungs-/Verzögerungsmittel zur Beschleunigung des Ventilschiebers (2, 48) aus der vollständig geschlossenen Position während der Bewegung durch die Beschleunigungszone zur vollständig offenen Position und zur Verlangsamung des Ventilschiebers (2, 48) bei der Rückkehr zu der vollständig geschlossenen Position;
zweite Beschleunigungs-/Verzögerungsmittel zur Verlangsamung des Ventilschiebers (2, 48) während der Bewegung durch die Verzögerungszone, während er sich der vollständig offenen Position nähert, und zur Beschleunigung des Ventilschiebers (2, 48) beim Verlassen der vollständig offenen Position; und
Antriebsmittel zum Antreiben des Ventilschiebers (2, 48) mit der Hin- und Herbewegung.

2. Ein Schnellauslöseventil gemäß Anspruch 1, wobei die ersten und zweiten Beschleunigungs-/Verzögerungsmittel Federn (7a, 7b) sind.

3. Ein Schnellauslöseventil gemäß Anspruch 2, wobei die Beschleunigungs- und die Verzögerungszone die gleiche Länge haben wie der Abstand, über den sich eine Feder zwischen einem zusammengedrückten Zustand, in dem der Ventilschieber (2, 48) in einer der vollständig geschlossenen und vollständig offenen Positionen gegen sie drückt, und einem relativ entspannten Zustand erstreckt, in dem sich der Ventilschieber (2, 48) in der anderen der vollständig geschlossenen und vollständig offenen Positionen befindet.

4. Ein Schnellauslöseventil gemäß Anspruch 1, wobei die ersten und zweiten Beschleunigungs-/Verzögerungsmittel Fluidkammern in gegenüberliegenden Enden der Bohrung sind, wobei jede der Fluidkammern durch Ventile in Flüssigkeitsaustausch mit Niederdruck- und Hochdruckleitungen (24) steht.

5. Ein Schnellauslöseventil gemäß Anspruch 1, wobei der Ventilkörper-Fluidströmungs-Durchgang einen signifikant größeren Durchmesser hat als der Schieber-Fluidströmungs-Durchgang (9).

6. Ein Schnellauslöseventil gemäß Anspruch 1, wobei das Antriebsmittel erste und zweite Magnetspulen (3a-3f) umfasst, die sich auf der einen Seite beziehungsweise der gegenüberliegenden Seite des Ventilkörpers befinden.

7. Ein Schnellauslöseventil gemäß Anspruch 6, wobei die ersten und zweiten Magnetspulen (3a-3f) auch als die ersten beziehungsweise zweiten Beschleunigungs-/Verzögerungsmittel dienen.

8. Ein Schnellauslöseventil gemäß Anspruch 1, wobei der eine Schieber-Fluidströmungs-Durchgang (9) in der ersten Endposition vollständig von dem Ventilkörper verschlossen ist und in der zweiten Endposition vollständig zu dem einen Ventilkörper-Fluidströmungs-Durchgang hin geöffnet ist.

9. Ein Schnellauslöseventil gemäß Anspruch 1, wobei der eine Schieber-Fluidströmungs-Durchgang (9) in Flüssigkeitsaustausch mit dem einen Ventilkörper-Fluidströmungs-Durchgang steht, wenn sich der Ventilschieber (2, 48) in der zweiten Endposition befindet.

10. Ein Schnellauslöseventil gemäß Anspruch 1, das weiter Folgendes umfasst:

    eine Ausgleichskammer, die in dem Ventilkörper gebildet ist und offen für Kontakt mit der zylindrischen Oberfläche des Ventilschiebers (2, 48) über eine Fläche ist, die einer Kontaktfläche diametral gegenüberliegt, die zwischen der zylindrischen Oberfläche des Ventilschiebers (2, 48) und dem Ventilkörper-Fluidströmungs-Durchgang auf der Seite der Einlassöffnung liegt, wobei die offene Fläche der Ausgleichskammer im Austausch mit dem Ventilschieber (2, 48) im Wesentlichen gleich mit der Fläche des Austauschs zwischen dem Ventilschieber (2, 48) und dem Ventilkörper-Fluidströmungs-Durchgang ist, wobei sich der Ventilschieber (2, 48) in der ersten Endposition befindet; und eine Ausgleichsleitung, die einen Flüssigkeitsaustausch zwischen der Ausgleichskammer und dem Ventilkörper-Fluidströmungs-Durchgang auf der Seite der Einlassöffnung herstellt.

11. Ein Schnellauslöseventil gemäß Anspruch 1, das weiter Folgendes umfasst:

    einen zweiten Ventilkörper-Fluidströmungs-Durchgang, der sich durch den Ventilkörper zwischen der Einlass- und der Auslassöffnung erstreckt, wobei der zweite Ventilkörper-Fluidströmungs-Durchgang von dem einen Ventilkörper-Fluidströmungs-Durchgang beabstandet und zu ihm parallel ist, und einen zweiten Schieber-Fluidströmungs-Durchgang, der sich durch den Ventilschieber (2, 48) zwischen Öffnungen in gegenüberliegenden Positionen in der zylindrischen Oberfläche des Ventilschiebers (2, 48) erstreckt, wobei der zweite Schieber-Fluidströmungs-Durchgang von dem einen Schieber-Fluidströmungs-Durchgang (9) beabstandet und zu ihm parallel ist.

12. Ein Schnellauslöseventil gemäß Anspruch 11, das weiter dritte und vierte Ventilkörper-Fluidströmungs-Durchgänge umfasst, wobei der eine Schieber-Fluidströmungs-Durchgang (9) selektiv Fluidströmung durch den ersten Ventilkörper-Fluidströmungs-Durchgang oder den zweiten Ventilkörper-Fluidströmungs-Durchgang ermöglicht und der zweite Schieber-Fluidströmungs-Durchgang selektiv die Strömung durch den dritten Ventilkörper-Fluidströmungs-Durchgang oder den vierten Ventilkörper-Fluidströmungs-Durchgang ermöglicht.

13. Ein Schnellauslöseventil gemäß Anspruch 1, wobei das Schnellauslöseventil einen schnell auslösenden Teller-Ventil-Mechanismus mit einem Teller-Ventil (63, 82) zum selektiven Durchlassen oder Blockieren der Fluidströmung durch eine axiale Öffnung in einem Zylinderkopf (65) einschließt, der eine Verbrennungskammer in einem Verbrennungsmotor verschließt, wobei der Teller-Ventil-Mechanismus Folgendes umfasst:

    ein Stellglied, wobei der Ventilkörper eine axiale Bohrung (12a) mit ersten, zweiten, dritten und vierten Öffnungen einschließt, die sich radial von der Bohrung erstrecken und in Flüssigkeitsaustausch mit ihr stehen, einen Kolben, der zur Hin- und Herbewegung zwischen der oberen und der unteren Endposition verschiebbar in der Bohrung montiert ist, wobei die zweite Öffnung in der unteren Endposition von dem Kolben verschlossen wird, die dritte Öffnung von dem Kolben in der oberen Endposition verschlossen wird und die vierte Öffnung oberhalb der oberen Endposition liegt, und erste und zweite Federmittel, die in die Bohrung montiert sind, wobei die erste Feder von dem Kolben in der unteren Endposition zusammengedrückt und entspannt wird, wenn sich der Kolben in der oberen Endposition befindet, und die zweite Feder von dem Kolben in der oberen Endposition zusammengedrückt und von dem Kolben in der unteren Endposition entspannt wird, und das Teller-Ventil (63, 82), das Folgendes umfasst:

    eine zylindrische Ventilkammer, geformt im Zylinderkopf (65), wobei sich die axiale Öffnung an einem Ende davon in die Verbrennungskammer öffnet und eine radiale Öffnung von der axialen Öffnung beabstandet ist, und

ein Teller-Ventil-(63, 82)-Glied, verschiebbar montiert in der zylindrischen Ventilkammer zum Zwecke der Bewegung zwischen einer untersten Endposition, welche die axiale Öffnung verschließt, und einer obersten Endposition fort von der radialen Öffnung und worin sowohl die axiale Öffnung als auch die radiale Öffnung offen und im Flüssigkeitsaustausch miteinander sind, wobei sich die radiale Öffnung zwischen der untersten und der obersten Endposition befindet und die unterste Endposition von der radialen Öffnung beabstandet ist, so dass das Teller-Ventil-(63, 82)-Glied sich um einen vordefinierten Abstand von der untersten Endposition aufwärts bewegen muss, bevor es die radiale Öffnung erreicht und anschließend freilegt und so das Ventil öffnet, um Flüssigkeitsaustausch zwischen und durch die axiale Öffnung und die radiale Öffnung zu ermöglichen, und die oberste Endposition von der radialen Öffnung beabstandet ist, so dass das Teller-Ventil-(63, 82)-Glied sich von der obersten Endposition um einen vordefinierten Abstand abwärts bewegen muss, bevor es die radiale Öffnung erreicht und anschließend freilegt und so durch Blockieren des Flüssigkeitsaustauschs zwischen der axialen Öffnung und der radialen Öffnung das Ventil schließt.

14. Ein Schnell auslösender Teller-Ventil-Mechanismus gemäß Anspruch 13, der weiter ein Regelventil zur Betätigung des Teller-Ventils (63, 82) einschließt, wobei das Regelventil Folgendes umfasst:

einen Regelventilkörper mit einer sich axial erstreckenden Bohrung und, die Bohrung kreuzend, ersten, zweiten, dritten und vierten Regelventildurchlässen, die sich parallel durch den Regelventilkörper zwischen der Einlass- und der Auslassöffnung erstrekken,

einen zylindrischen Ventilschieber (2, 48), verschiebbar in der Bohrung montiert zur Hin- und Herbewegung auf einem linearen Weg zwischen einer ersten Endposition auf einer Seite des Regelventilkörpers und einer zweiten Endposition auf einer Seite des Regelventilkörpers gegenüber der einen Seite,

erste und zweite Schieber-Fluidströmungs-Durchgänge (9), die sich durch den Ventilschieber (2, 48) zwischen Öffnungen in gegenüberliegenden Positionen in einer zylindrischen Oberfläche des Ventilschiebers (2, 48) erstrekken, wobei sich der erste und der zweite Fluidströmungs-Durchgang (9) in dem zweiten beziehungsweise vierten Regelventildurchlass befinden, um eine Strömung **dadurch** zu ermöglichen, während der erste und der dritte Regelventildurchlass von dem Ventilschieber (2, 48) verschlossen werden, wenn sich die Ventilspule (2, 48) in der zweiten Endposition und in dem ersten beziehungsweise dritten Regelventildurchlass befindet, um eine Strömung **dadurch** zuzulassen, während der zweite und der vierte Regelventildurchlass von dem Ventilschieber (2, 48) in der ersten Endposition verschlossen werden,

wobei:

der erste Regelventildurchlass mit der ersten Öffnung zum Zwecke des Einlassens einer Hochdruckflüssigkeit dort hinein verbunden ist, der zweite Regelventildurchlass mit der vierten Öffnung zum Zwecke des Einlassens einer Hochdruckflüssigkeit dort hinein verbunden ist, der dritte Regelventildurchlass mit der zweiten Öffnung zum Zwecke des Ablassens von Flüssigkeitsdruck daraus verbunden ist, und der vierte Regelventildurchlass mit der dritten Öffnung zum Zwecke des Ablassens von Flüssigkeitsdruck daraus verbunden ist.

15. Ein Schnellauslöseventil gemäß Anspruch 1, wobei das Schnellauslöseventil ein schnell auslösendes Zweiweg-Einbauventil einschließt, das Folgendes umfasst:

den Ventilkörper, der eine zylindrische Kammer mit einer axialen Öffnung in einer zylindrischen Endfläche der zylindrischen Kammer, mindestens einer radialen Öffnung, die sich radial von der zylindrischen Kammer erstreckt, und einem Ventilsitz bestimmt, welcher die axiale Öffnung umgibt,

ein Kolben-Ventil-Glied, verschiebbar in der zylindrischen Kammer montiert, zum Zwecke einer Hin- und Herbewegung zwischen einer geschlossenen Endposition, in der sich das Kolben-Ventil-Glied in dem Ventilsitz befindet und den Flüssigkeitsaustausch zwischen der axialen und der radialen Öffnung blokkiert, und einer offenen Endposition, in der das Kolben-Ventil-Glied abgesetzt von der radialen Öffnung und axial gegenüber der axialen Öffnung liegt, und zwar relativ zu der radialen Öffnung, und einen Flüssigkeitsaustausch zwischen der axialen und der radialen Öffnung ermöglicht, wobei sich die radiale Öffnung axial zwischen der geschlossenen und der offenen Endposition und in der geschlossenen und der offenen Endposition in einem axialen Abstand von dem Kolben-Ventil-Glied befindet, um es dem Kolben-Ventil-Glied zu ermöglichen, in der Bewegung zwischen der geschlossenen Endposition und der radialen Öffnung und in der Bewegung zwischen der offenen Endposition und der radialen Öffnung zu beschleunigen, und

Vorspannungsmittel zum Vorspannen des Kolbenschieber zu der geschlossenen Endposition hin.

16. Ein Schnellauslöseventil gemäß Anspruch 1, wobei das Schnellauslöseventil Teil eines Kraftstoffeinspritzsystems ist, das Folgendes umfasst:

eine Kraftstoffeinspritzdüse, und
erste und zweite schnell auslösende Zweiweg-Einbauventile,

wobei das erste Einbauventil in Reihe mit der Kraftstoffeinspritzdüse verbunden ist, um Kraftstoff mit hohem Druck der Kraftstoffeinspritzdüse zuzuführen, und das zweite Einbauventil parallel mit dem ersten Einbauventil geschaltet ist, um durch das erste Einbauventil Hochdruck aus der Kraftstoffeinspritzdüse abzulassen, wobei jedes der ersten und zweiten Einbauventile Folgendes umfasst:

den Ventilkörper, der eine zylindrische Kammer mit einer axialen Öffnung in einer zylindrischen Endfläche der zylindrischen Kammer und einer radialen Öffnung, die sich radial von der zylindrischen Kammer erstreckt, und einem Ventilsitz bestimmt, welcher die axiale Öffnung umgibt,
ein Kolben-Ventil-Glied, verschiebbar in der zylindrischen Kammer montiert, zum Zwecke einer Hin- und Herbewegung zwischen einer geschlossenen Endposition, in der sich das Kolben-Ventil-Glied in dem Ventilsitz befindet und den Flüssigkeitsaustausch zwischen der axialen und der radialen Öffnung blokkiert, und einer offenen Endposition, in der das Kolben-Ventil-Glied abgesetzt von der radialen Öffnung und axial gegenüber der axialen Öffnung liegt, und zwar relativ zu der radialen Öffnung, und einen Flüssigkeitsaustausch zwischen der axialen und der radialen Öffnung ermöglicht, wobei sich die radiale Öffnung axial zwischen der geschlossenen und der offenen Endposition und in der geschlossenen und der offenen Endposition in einem axialen Abstand von dem Kolben-Ventil-Glied befindet, um es dem Kolben-Ventil-Glied zu ermöglichen, in der Bewegung zwischen der geschlossenen Endposition und der radialen Öffnung und in der Bewegung zwischen der offenen Endposition und der radialen Öffnung zu beschleunigen, und
Vorspannungsmittel zum Vorspannen des Kolbenschiebers zu der geschlossenen Endposition hin.

17. Ein Kraftstoffeinspritzsystem gemäß Anspruch 16, das weiter Folgendes umfasst:

Leitungen, die die Kraftstoffeinspritzdüse über das erste und das zweite Einbauventil mit einer Hochdruck-Kraftstoffquelle und einem Niederdruck-Kraftstoffbehälter verbinden, und
Öffnungs-Mittel (96, 97), die sich in einer der Leitungen zwischen der Hochdruck-Kraftstoffquelle und den ersten und zweiten Einbauventilen befinden.

18. Ein Schnellauslöseventil gemäß Anspruch 1, das Folgendes umfasst:

mindestens zwei Magnetspulen (3a-3f) in Reihe, positioniert an der einen Seite, und mindestens zwei Magnetspulen (3a-3f) in Reihe, positioniert an der gegenüberliegenden Seite, um die Bohrung herum, um die Ventilspule (2, 48) in der Bewegung zwischen der vollständig geschlossenen und der vollständig offenen Position abwechselnd zu beschleunigen und zu verlangsamen.

19. Ein Schnellauslöseventil gemäß Anspruch 1, wobei das Schnellauslöseventil einen schnell auslösenden Teller-Ventil-Mechanismus einschließt, um die Fluidströmung durch eine axiale Öffnung in einem Zylinderkopf (65), der eine Verbrennungskammer in einem Verbrennungsmotor verschließt, selektiv zu ermöglichen oder zu blockieren, wobei der Teller-Ventil-Mechanismus Folgendes umfasst:

eine zylindrische Ventilkammer, geformt im Zylinderkopf (65), wobei die axiale Öffnung an einem Ende davon sich in die Verbrennungskammer öffnet und mindestens eine radiale Öffnung von der axialen Öffnung beabstandet ist, und
ein Teller-Ventil-Glied (63, 82), verschiebbar montiert in der zylindrischen Ventilkammer, zur Bewegung zwischen einer untersten Endposition, welche die axiale Öffnung verschließt, und einer obersten Endposition, fort von der radialen Öffnung, in der sowohl die axiale Öffnung als auch die radiale Öffnung offen sind und in Flüssigkeitsaustausch miteinander stehen,

wobei die radiale Öffnung sich zwischen der untersten und der obersten Endposition befindet und die unterste Endposition von der radialen Öffnung beabstandet ist, so dass das Teller-Ventil-Glied (63, 82) sich um einen vordefinierten Abstand von der untersten Endposition aufwärts bewegen muss, bevor es die radiale Öffnung erreicht und anschließend freilegt und so das Ventil öffnet, um einen Flüssigkeitsaustausch zwischen und durch die axiale Öffnung und die radiale Öffnung zu ermöglichen, und wobei die oberste Endposition von der radialen Öffnung beabstandet ist, so dass das Teller-Ventil-(63, 82)-Glied sich um einen vordefinierten Abstand von der obersten Endposition abwärts bewegen muss, bevor es die radiale Öffnung erreicht und anschließend freilegt und so das Ventil durch Blockierung des Flüssigkeitsaustauschs zwischen der axialen Öffnung und der radialen Öffnung schließt.

20. Ein Schnellauslöseventil gemäß Anspruch 1, wobei der Ventilkörper-Fluidströmungs-Durchgang ein gerader Durchgang ist.

21. Ein Schnellauslöseventil gemäß Anspruch 1, wobei die Einlass- und die Auslassöffnung axial ausgerichtet sind.


**Revendications**

1. Vanne à actionnement rapide comprenant :

un corps de vanne ayant un alésage axial (12a) ; un tiroir de vanne cylindrique (2, 48) monté de manière coulissante dans ledit alésage pour un mouvement alternatif selon un chemin linéaire entre une position entièrement fermée en un premier côté dudit corps de vanne et une position entièrement ouverte en un côté dudit corps de vanne opposé audit premier côté ; au moins un passage (8) d'écoulement de fluide de corps de vanne s'étendant à travers ledit corps de vanne entre des orifices d'entrée (4) et de sortie (6) et coupant ledit alésage ; au moins un passage (9) d'écoulement de fluide de tiroir de vanne s'étendant à travers ledit tiroir de vanne (2, 48) entre des ouvertures en des endroits opposés dans une surface cylindrique dudit tiroir de vanne (2, 48), ledit un passage (8) d'écoulement de fluide de corps de vanne étant éloigné dudit un passage (9) d'écoulement de fluide de tiroir avec ledit tiroir de vanne (2, 48) dans ladite position entièrement fermée, pour créer une zone d'accélération (14) à travers laquelle ledit tiroir de vanne (2, 48) accélère avant que ledit un passage (9) d'écoulement de fluide de tiroir vienne en communication fluidique avec ledit un passage (8) d'écoulement de fluide de corps de vanne, et pour créer une zone de décélération (15) à travers laquelle ledit tiroir de vanne (2, 48) est décéléré avant de venir au repos dans ladite position entièrement ouverte, ladite zone d'accélération ayant une longueur sensiblement plus longue que celle requise pour étanchéité ; de premiers moyens d'accélération/décélération pour accélérer ledit tiroir de vanne (2, 48) de la position entièrement fermée en déplacement dans ladite zone d'accélération vers ladite position entièrement ouverte, et pour décélérer ledit tiroir de vanne (2, 48) en retournant à ladite position entièrement fermée ; de seconds moyens d'accélération/décélération pour décélérer ledit tiroir de vanne (2, 48) pendant une course dans ladite zone de décélération, s'approchant de ladite position entièrement ouverte, et pour accélérer ledit tiroir de vanne (2, 48) en quittant ladite position entièrement ouverte ; et des moyens moteurs pour entraîner ledit tiroir de vanne (2, 48) par ledit mouvement alternatif.

2. Vanne à actionnement rapide selon la revendication 1, dans laquelle lesdits premiers et seconds moyens d'accélération/décélération sont des ressorts (7a, 7b).

3. Vanne à actionnement rapide selon la revendication 2, dans laquelle lesdites zones d'accélération et de décélération sont égales en longueur à la distance sur laquelle un ressort s'étend entre un état comprimé, ledit tiroir de vanne (2, 48) portant contre celui-ci dans l'une desdites positions entièrement fermée et entièrement ouverte, et un état relativement détendu, ledit tiroir de vanne (2, 48) étant dans l'autre desdites positions entièrement fermée et entièrement ouverte.

4. Vanne à actionnement rapide selon la revendication 1, dans laquelle lesdits premiers et seconds moyens d'accélération/décélération sont des chambres de fluide à l'intérieur d'extrémités opposées dudit alésage, chacune desdites chambres de fluide étant en communication fluidique avec des lignes à basse pression et à haute pression (24) par l'intermédiaire de vannes.

5. Vanne à actionnement rapide selon la revendication 1, dans laquelle ledit passage d'écoulement de fluide de corps de vanne a un diamètre considérablement plus grand que ledit passage (9) d'écoulement de fluide du tiroir.

6. Vanne à actionnement rapide selon la revendication 1, dans laquelle lesdits moyens moteurs comprennent de premier et second électro-aimants (3a à 3f) respectivement situés en ledit premier côté et ledit côté opposé dudit corps de vanne.

7. Vanne à actionnement rapide selon la revendication 6, dans laquelle lesdits premier et second électro-aimants (3a à 3f) servent également, respectivement, dedits premiers et seconds moyens d'accélération/décélération.

8. Vanne à actionnement rapide selon la revendication 1, dans laquelle ledit un passage (9) d'écoulement de fluide de tiroir est entièrement fermé par ledit corps de vanne dans ladite première position limite et est entièrement ouvert audit un passage d'écoulement de fluide de corps de vanne dans ladite seconde position limite.

9. Vanne à actionnement rapide selon la revendication 1, dans laquelle ledit un passage (9) d'écoulement de fluide de tiroir est en communication fluidique avec ledit un passage d'écoulement de fluide de corps de vanne lorsque ledit tiroir de vanne (2, 48) est dans ladite seconde position limite.

10. Vanne à actionnement rapide selon la revendication 1, comprenant en outre :

une chambre d'équilibrage formée à l'intérieur dudit corps de vanne et ouverte pour entrer en contact avec la surface cylindrique dudit tiroir de vanne (2, 48) dans une zone diamétralement opposée à une zone de contact entre la surface cylindrique dudit tiroir de vanne (2, 48) et ledit passage d'écoulement de fluide de corps de vanne sur le côté dudit orifice d'entrée, la zone ouverte de ladite chambre d'équilibrage en communication avec ledit tiroir de vanne (2, 48) étant sensiblement égale à la zone de communication entre ledit tiroir de vanne (2, 48) et ledit passage d'écoulement de fluide de corps de vanne, ledit tiroir de vanne (2, 48) étant positionné dans ladite première position limite ; et
une conduite d'équilibrage assurant une communication fluidique entre ladite chambre d'équilibrage et ledit passage d'écoulement de fluide de corps de vanne sur le côté de l'orifice d'entrée.

11. Vanne à actionnement rapide selon la revendication 1, comprenant en outre :

un second passage d'écoulement de fluide de corps de vanne s'étendant à travers ledit corps de vanne entre des orifices d'entrée et de sortie, ledit second passage d'écoulement de fluide de corps de vanne étant éloigné dudit un passage d'écoulement de fluide de corps de vanne et parallèle à celui-ci ; et
un second passage d'écoulement de fluide de tiroir s'étendant à travers ledit tiroir de vanne (2, 48) entre des ouvertures en des endroits opposés dans la surface cylindrique dudit tiroir de vanne (2, 48), ledit second passage d'écoulement de fluide de tiroir étant éloigné dudit un passage (9) d'écoulement de fluide du tiroir et parallèle à celui-ci.

12. Vanne à actionnement rapide selon la revendication 11, comprenant également de troisième et quatrième passages d'écoulement de fluide de corps de vanne, ledit un passage (9) d'écoulement de fluide de tiroir permettant sélectivement un écoulement de fluide à travers ledit premier passage d'écoulement de fluide de corps de vanne ou ledit deuxième passage d'écoulement de fluide de corps de vanne, et ledit deuxième passage d'écoulement de fluide de tiroir permettant sélectivement un écoulement à travers ledit troisième passage d'écoulement de fluide de corps de vanne ou ledit quatrième passage d'écoulement de fluide de corps de vanne.

13. Vanne à actionnement rapide selon la revendication 1, dans laquelle la vanne à actionnement rapide inclut un mécanisme de vanne à clapet à actionnement rapide ayant une vanne à clapet (63, 82) pour permettre ou bloquer sélectivement un écoulement de fluide à travers un orifice axial dans une culasse (65) fermant une chambre de combustion dans un moteur à combustion interne, ledit mécanisme de vanne à clapet comprenant :

un actionneur dans lequel le corps de vanne inclut un alésage axial (12a) ayant de premier, deuxième, troisième et quatrième orifices s'étendant radialement à partir de l'alésage et en communication fluidique avec celui-ci ;
un piston monté de manière coulissante dans ledit alésage pour un mouvement alternatif entre des positions limites haute et basse, ledit deuxième orifice étant fermé par ledit piston dans ladite position limite basse, ledit troisième orifice étant fermé par ledit piston dans ladite position limite haute et ledit quatrième orifice étant au-dessus de ladite position limite haute ; et
de premiers et seconds moyens à ressort montés à l'intérieur dudit alésage, ledit premier ressort étant comprimé par ledit piston dans ladite position limite basse et détendu avec ledit piston positionné dans ladite position limite haute, et ledit second ressort étant comprimé par ledit piston dans ladite position limite haute et détendu avec ledit piston dans ladite position limite basse ; et
la vanne à clapet (63, 82) comprenant :

une chambre de vanne cylindrique formée dans la culasse (65), l'orifice axial à l'une de ses extrémités débouchant dans la chambre de combustion et un orifice radial étant éloigné dudit orifice axial ; et

un élément de vanne à clapet (63, 82) monté de manière coulissante dans ladite chambre de vanne cylindrique pour un mouvement entre une position limite la plus basse fermant ledit orifice axial et une position limite la plus haute dégagée dudit orifice radial et où ledit orifice axial et ledit orifice radial sont tous les deux ouverts et en communication fluidique l'un avec l'autre, ledit orifice radial étant positionné entre lesdites positions limites la plus basse et la plus haute, ladite position limite la plus basse étant éloignée dudit orifice radial de telle sorte que ledit élément de vanne à clapet (63, 82) doive se déplacer sur une distance prédéterminée vers le haut depuis ladite position limite la plus basse avant d'atteindre et de découvrir ensuite ledit orifice radial, ouvrant ainsi la vanne pour permettre une communication fluidique entre ledit orifice axial et ledit orifice radial et à travers ceux-ci, et ladite position limite la plus haute étant éloignée dudit orifice radial de telle sorte que ledit élément de vanne à clapet (63, 82) doive se déplacer sur une distance prédéterminée vers le bas depuis ladite position limite la plus haute avant d'atteindre et de découvrir ensuite ledit orifice radial, fermant ainsi la vanne en bloquant une communication fluidique entre ledit orifice axial et ledit orifice radial.

**14.** Mécanisme de vanne à clapet à actionnement rapide selon la revendication 13, incluant en outre une vanne de commande pour actionner la vanne à clapet (63, 82), ladite vanne de commande comprenant :

un corps de vanne de commande ayant un alésage s'étendant axialement et, coupant ledit alésage, de premier, deuxième, troisième et quatrième passages de vanne de commande s'étendant parallèlement à travers ledit corps de vanne de commande entre des orifices d'entrée et de sortie ;
un tiroir de vanne cylindrique (2, 48) monté de manière coulissante dans ledit alésage pour un mouvement alternatif selon un chemin linéaire entre une première position limite en un premier côté dudit corps de vanne de commande et une seconde position limite en un côté dudit corps de vanne de commande opposé audit premier côté ;
de premier et second passages (9) d'écoulement de fluide de tiroir s'étendant à travers ledit tiroir de vanne (2, 48) entre des ouvertures à des endroits opposés dans une surface cylindrique dudit tiroir de vanne (2, 48), lesdits premier et second passages (9) d'écoulement de fluide étant respectivement situés dans lesdits deuxième et quatrième passages de vanne de commande pour permettre un écoulement à travers ceux-ci, tandis que lesdits premier et troisième passages de vanne de commande sont fermés par ledit tiroir de vanne (2, 48), ledit tiroir de vanne (2, 48) étant dans ladite seconde position limite et respectivement situé dans lesdits premier et troisième passages de vanne de commande pour permettre un écoulement à travers ceux-ci, tandis que lesdits deuxième et quatrième passages de vanne de commande sont fermés par ledit tiroir de vanne (2, 48) dans ladite première position limite ;

dans lequel :

ledit premier passage de vanne de commande est relié audit premier orifice pour l'introduction d'un fluide sous haute pression dans celui-ci ;
ledit deuxième passage de vanne de commande est relié audit quatrième orifice pour l'introduction d'un fluide sous haute pression dans celui-ci ;
ledit troisième passage de vanne de commande est relié audit deuxième orifice pour l'évacuation d'une pression de fluide à partir de celui-ci ; et
ledit quatrième passage de vanne de commande est relié audit troisième orifice pour l'évacuation d'une pression de fluide à partir de celui-ci.

**15.** Vanne à actionnement rapide selon la revendication 1, dans laquelle la vanne à actionnement rapide inclut une vanne à cartouche à deux voies à actionnement rapide comprenant :

le corps de vanne définissant une chambre cylindrique avec un orifice axial dans une face d'extrémité cylindrique de la chambre cylindrique, au moins un orifice radial s'étendant radialement à partir de la chambre cylindrique et un siège de vanne entourant ledit orifice axial ;
un élément de vanne à piston monté de manière coulissante dans ladite chambre cylindrique pour un mouvement alternatif entre une position limite fermée où ledit élément de vanne à piston est en appui dans ledit siège de vanne bloquant une communication fluidique entre lesdits orifices axial et radial, et une position limite ouverte où ledit élément de vanne à piston est dégagé dudit orifice radial et axialement opposé audit orifice axial, par rapport audit orifice radial, permettant une communication fluidique entre lesdits orifices axial et radial, ledit orifice radial étant positionné axialement entre lesdites positions limites fermée et ouverte et axialement éloigné dudit élément de vanne à piston dans lesdites positions limites fermée et ouverte pour permettre audit élément de vanne à piston d'accélérer en déplacement entre ladite position limite fermée et ledit orifice radial et en déplacement entre ladite position limite ouverte et ledit orifice radial ; et

des moyens de solliciation pour solliciter ladite vanne à piston vers ladite position limite fermée.

16. Vanne à actionnement rapide selon la revendication 1, dans laquelle la vanne à actionnement rapide est une partie d'un système d'injection de carburant comprenant :

une buse d'injection de carburant ; et

de première et seconde vannes à cartouche à deux voies à actionnement rapide, ladite première vanne à cartouche étant reliée en série à ladite buse d'injection de carburant pour délivrer du carburant à haute pression à ladite buse d'injection de carburant, et ladite seconde vanne à cartouche étant reliée en parallèle à ladite première vanne à cartouche pour décharger une pression élevée à partir de ladite buse d'injection de carburant, par l'intermédiaire de ladite première vanne à cartouche, chacune desdites première et seconde vannes à cartouche comprenant :

le corps de vanne définissant une chambre cylindrique avec un orifice axial dans une face d'extrémité cylindrique de la chambre cylindrique et un orifice radial s'étendant radialement à partir de la chambre cylindrique et un siège de vanne entourant ledit orifice axial ;

un élément de vanne à piston monté de manière coulissante dans ladite chambre cylindrique pour un mouvement alternatif entre une position limite fermée où ledit élément de vanne à piston est en appui dans ledit siège de vanne bloquant une communication fluidique entre lesdits orifices axial et radial, une position limite ouverte où ledit élément de vanne à piston est dégagé dudit orifice radial et axialement opposé audit orifice axial, par rapport audit orifice radial, permettant une communication fluidique entre lesdits orifices axial et radial, ledit orifice radial étant positionné axialement entre lesdites positions limites fermée et ouverte et axialement éloigné dudit élément de vanne à piston dans lesdites positions limites fermée et ouverte pour permettre audit élément de vanne à piston d'accélérer en déplacement entre ladite position limite fermée et ledit orifice radial et en déplacement entre ladite position limite ouverte et ledit orifice radial ; et

des moyens de sollicitation pour solliciter ladite vanne à piston vers ladite position limite fermée.

17. Système d'injection de carburant selon la revendication 16, comprenant en outre :

des conduites reliant ladite buse d'injection de carburant à une source de carburant sous haute pression et à un réservoir de carburant sous basse pression par l'intermédiaire desdites première et seconde vannes à cartouche ; et des moyens d'orifices (96, 97) placés dans l'une desdites conduites entre ladite source de carburant sous haute pression et lesdites première et seconde vannes à cartouche.

18. Vanne à actionnement rapide selon la revendication 1, comprenant :

au moins deux électro-aimants (3a à 3f) en série, situés en ledit premier côté et au moins deux électro-aimants (3a à 3f) en série placés en ledit côté opposé, entourant ledit alésage, pour accélérer et décélérer alternativement ledit tiroir de vanne (2, 48) en déplacement entre lesdites positions entièrement fermée et entièrement ouverte.

19. Vanne à actionnement rapide selon la revendication 1, dans laquelle la vanne à actionnement rapide inclut un mécanisme de vanne à clapet à actionnement rapide pour permettre ou bloquer sélectivement un écoulement de fluide à travers un orifice axial dans une culasse (65) fermant une chambre de combustion dans un moteur à combustion interne, ledit mécanisme de vanne à clapet comprenant

une chambre de vanne cylindrique formée dans la culasse (65), l'orifice axial à l'une de ses extrémités débouchant dans la chambre de combustion et au moins un orifice radial étant éloigné dudit orifice axial ; et un organe de vanne à clapet (63, 82) monté de manière coulissante dans ladite chambre de vanne cylindrique pour un mouvement entre une position limite la plus basse fermant ledit orifice axial et une position limite la plus haute dégagée dudit orifice radial où ledit orifice axial et ledit orifice radial sont tous les deux ouverts et en communication fluidique l'un avec l'autre, ledit orifice radial étant positionné entre lesdites position limites la plus basse et la plus haute, ladite position limite la plus basse étant éloignée dudit orifice radial de telle sorte que ledit élément de vanne à clapet (63, 82) doive se déplacer sur une distance prédéterminée vers le haut à partir de ladite position limite la plus basse avant d'atteindre et de découvrir ensuite ledit orifice radial, ouvrant ainsi la vanne pour permettre une communication fluidique entre ledit orifice axial et ledit orifice radial et à travers ceux-ci, et ladite position limite la plus haute étant éloignée dudit orifice radial de telle sorte que ledit organe de vanne à clapet (63, 82) doive se déplacer sur une distance prédéterminée vers le bas à partir de ladite position limite la plus haute avant d'atteindre et de découvrir ensuite ledit orifice radial fermant ainsi la vanne en bloquant une communication fluidique entre ledit orifice axial et ledit orifice radial.

20. Vanne à actionnement rapide selon la revendication 1, dans laquelle le passage d'écoulement de fluide de corps de vanne est un passage rectiligne.

21. Vanne à actionnement rapide selon la revendication 1, dans laquelle les orifices d'entrée et de sortie sont axialement alignés.

FIG. 1A

FIG. 1B

FIG. 2

FIG. 3

# FIG. 4A

# FIG. 4B

FIG. 5A

FIG. 5B

FIG. 6A

EP 1 084 360 B1

40 42 44 46

3a 3b

7a 7b

51

48

41 49 43 45 50 47

FIG. 6B

43 32 44 42

3a 3b

33 31 34 41 45 40

FIG. 7A

FIG. 7B

FIG. 8

FIG. 9A

FIG. 9B

**EP 1 084 360 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3324890 A
- US 2916019 A
- US 4627596 A
- US 974413 A
- US 3472278 A
- DE 4030890
- GB 1156018 A